# EUROPEAN PATENT SPECIFICATION

(11) **EP 3 739 368 B1**
(45) Date of publication and mention of the grant of the patent: **02.10.2024**
(21) Application number: 20174003.2
(22) Date of filing: 12.05.2020
(51) Int. Cl.: G02B 6/44

(54) **AN OPTICAL FIBER SPLICE TRAY**
SPLEISSABLAGE FÜR OPTISCHE FASERN
PLATEAU D'ÉPISSURE À FIBRE OPTIQUE

(30) Priority: 17.05.2019 IT 201900006981
(43) Date of publication of application: 18.11.2020
(73) Proprietor: Prysmian S.p.A., 20126 Milano (IT)
(72) Inventor: PADDICK, Nathan, 20126 Milano (IT)
(74) Representative: Perani & Partners S.p.A.

(56) References cited:
- EP-A1- 2 290 418
- EP-A1- 3 239 752
- WO-A1-2019/008069

## Description

### Field of the invention

The present invention relates to the field of optical fiber splicing joints and optical fiber splicing closures and/or boxes.

### Background of the invention

Typically, optical fiber cables enter into an optical fiber splicing closure which includes splice trays for retaining a plurality of splices. The splicing trays usually are pivotally connected one another or to a central panel. Furthermore, the extra optical fibers are routed and/or coiled in specific areas on the splicing trays or externally to the splicing trays.

The access to the optical splices involves the relative motion of the splicing trays and the respective extra optical fibers. Furthermore, the optical fibers entering in a splice tray are usually overlapped in specific cross-over points. Consequently, the access or the managing of the one or more fibers at that cross-over points is difficult and takes a lot of time to the operators in order to route the fibers correctly.

Moreover, a high number of optical fibers at cross-over points could damage the optical fibers themselves for the mutual rubbing during the routing operations and could attenuate the signal for the distortions of the optical fibers.

WO2008033997 discloses a fiber management system comprising a fiber circuit platform and a splice tray to hold a fiber splice. The splice tray is rotatably coupled to the fiber circuit platform and includes at least one latching mechanism rotatably engageable with the fiber circuit platform and disposed on an outer portion of the splice tray. The fiber management system, in particular the fiber circuit platform, allows a user to provide straightforward fiber circuit management at a premise or location.

DE 102016007178 discloses a splice cassette having a wavelength division multiplexing (WDM) filter which is attachable on a splice tray. The WDM filter is inserted into a bracket which is clipped into the splice tray. The bracket is provided with a U-shaped cross section and is engaged tightly over the WDM filter at the top and at the opposite edges. The bracket has a plate-shaped portion and two angled edge portions having projections for attachment to ribs of the splice tray.

EP 2290418 discloses a device having a splice cassette accommodator and a divider for individually guiding light waveguide fibers that are formed as fiber bundles. The accommodator includes a self-supporting module, locating channel and pin guides for holding splice cassettes or fiber management tools. Light waveguide fibers are guided from the divider to the channel. The self-supporting module is equipped with a self-supporting structure and includes two module shells that are attached with each other. A deposition device is snapped on the divider and/or the accommodator.

WO 2019008069 discloses a fiber optic trays adapted to increase fiber splicing/connecting and fiber organizing capacity on the tray. The trays can include multiple splice circuits, each splice circuit including a splice holder area or a connector holder area having a plurality of splice holders or connector holders, and at least one fiber organizing structure such as a pair of oblong spool structures.

EP 3239752 discloses a cable management device, in particular for fiber optic cables, with at least one module holder and with at least one cable management module, which has at least one holding unit for movable mounting on the module holder. The cable management module has at least one deformation element which is partially deformed, when the cable management module is pivoted about an axis of rotation and which forms at least part of a pivot axis of the cable management module.

The above mentioned splice trays provide a single routing path for the fibers requiring a crossover of all the optical fibers near the openings of the splice tray regardless of the available space between the openings and of the number of optical fibers entering in the tray.

### Summary of the invention

The Applicant has tackled the problem of providing a splice tray allowing an easy routing of the fibers on different paths without the need of a crossover of the optical fibers.

The Applicant has found that providing an optical fiber splice tray with two different routing paths departing from the openings for guiding the optical fiber from one opening towards routing coils, a splicing area or the opposite opening reduces the number of the optical fibers at cross-over point and improve the easiness of the routing operations.

Therefore, the present invention relates to an optical fiber splice tray for an optical termination box according to claim 1. Further embodiments are disclosed in the dependent claims.

### Brief description of the drawings

The present invention will now be described in more detail hereinafter with reference to the accompanying drawings, in which some embodiments of the invention are shown.
FIG. 1 is a top view of an optical fiber splice tray according to one embodiment of the present invention;
FIG. 2 is a top view of an optical fiber splice tray according to another embodiment of the present invention;
FIG. 3 is top view of the optical fiber splice tray of FIG. 1 with optical fibers;
FIG. 4 is top view of the optical fiber splice tray of FIG. 2 with optical fibers.

### Detailed description

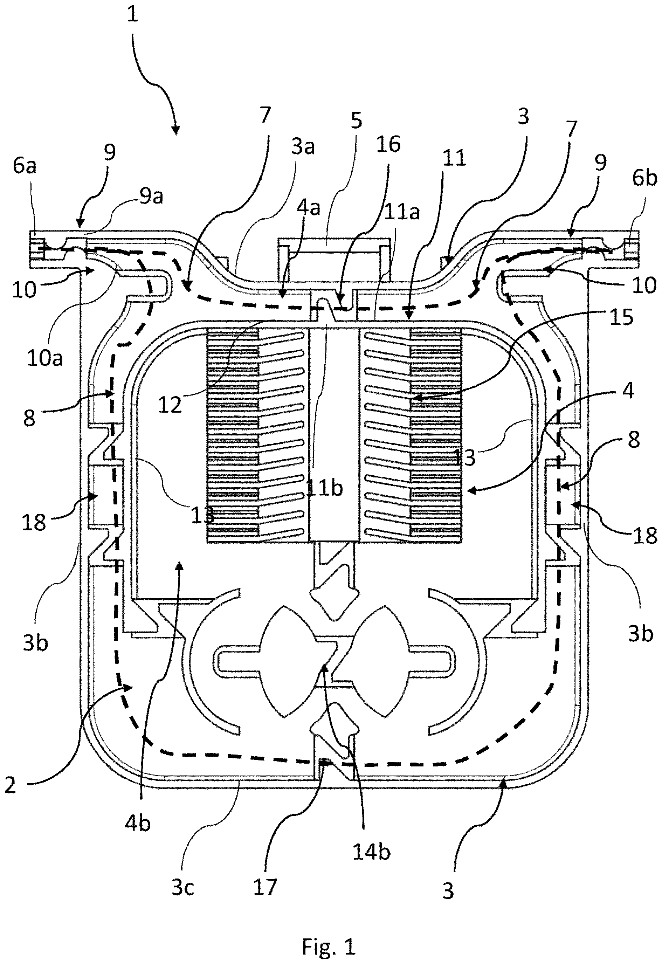

Figures 1-4 show an optical fiber splice tray 1 for an optical termination box comprising a base 2 on which one or more optical fibers 20 are routed and spliced. The optical fiber splice tray 1 comprises an external wall 3 projecting from the base 2 and surrounding a fiber management area 4 formed on the base 2. Specifically, the fiber management area 4 is configured to organize and splice the optical fibers 20 entering in the optical fiber splice tray 1.

A first opening 6a and a second opening 6b are formed on the external wall 3 and have an axis Y-Y aligned with a rotation axis X-X. Consequently, the optical fiber splice tray 1, during the rotation about the connecting member 5, prevent optical fiber 20 from damaging and strain due to torsion. A connecting member 5 is associated to the base 2 and defines the rotation axis X-X to pivotally connect the base 2 to the optical termination box. Preferably, the connecting member 5 is connected to the external wall 3 between the two openings 6a, 6b.

Preferably, the fiber management area 4 comprises a dividing wall 11 which divides the fiber management area 4 into a first area 4a, proximal to the rotation axis X-X and a second area 4b distal from rotation axis X-X. The dividing wall 11 has a first side 11a facing to the first area 4a and an opposite second side 11b facing to the second area 4b. In detail, the first area 4a and the second area 4b are bounded by the external wall 4 and the dividing wall 11.

According to one embodiment, the fiber management area 4 comprises at least a splicing support area 15 for retaining one or more splices within the second area 4b. Preferably, the fibre management area 4 comprises one or more routing coils 14a, 14b configured to receive the one or more optical fibers within the first area 4a and/or the second area 4b.

The optical fiber splice tray 1 comprises a first routing path 7 and a second routing path 8 extending from each opening 6a, 6b. Preferably, the first routing path 7 is formed within the first area 4a and the second routing paths 8 join the first area 4a and the second area 4b. Accordingly, the second routing paths 8 is formed partially within the first area 4a and partially within the second area 4b.

Each first routing path 7 and each second routing path 8 is configured to route away from the openings 6 the optical fibers 20 entering the fiber management area 4 through the openings 6a, 6b. Specifically, the optical fibers 20 entering from the first 6a and second opening 6b are routed to the first area 4a and/or to the second area 4b along the first routing path 7 or the second routing paths 8.

Adjacent to each opening 6a, 6b, the optical fiber splice tray 1 comprises a first guiding portion 9 and a second guiding portion 10. Specifically, the guiding portions 9, 10 are formed at each opening 6a, 6b to guide the optical fibers from the openings 6a, 6b to the routing paths 7, 8 avoiding damaging of the optical fibers. Each first guiding portion 9 is configured to guide the optical fibers 20 entering from the adjacent opening 6a, 6b along the first routing path 7. Each second guiding portion 10 is configured to guide the optical fibers 20 from the adjacent opening 6a, 6b along the second routing path 8.

Each second guiding portion 10 extends away from the first guiding portion 9 and away from the first routing path 7.

At each opening 6a, 6b, the first 9 and the second guiding portion 10 partially define a bifurcation between the first routing path 7 and the second routing path 8. Accordingly, each second guiding portion 10 has a curved shape with a radius of curvature equal or greater than a minimum bend radius of the optical fibers. Such radius of curvature allows to the operator to bend the optical fibers entering through the opening 6a, 6b without damaging of the fiber and to guide the fiber from the opening 6a, 6b to the second area 4b. Specifically, the second guiding portions 10 allow the optical fibers 20 entering from one opening 6a, 6b to deviate therealong from the rotation axis X-X along the second paths 8. In detail, each second guiding portion 10 allows the operator to route optical fibers 20 from the opening 6a, 6b towards the splicing support area 15.

For the purpose of the present invention a minimum bend radius of the optical fiber is the minimum radius to which the optical fiber may safely be bent during the installation without extra strain on it and no additional attenuation loss.

Preferably, the curved shape has at least a circular sector extending from the adjacent opening 6a, 6b with the respective radius of curvature. More preferably, the latter ranges between 7.5 mm to 30 mm.

The second guiding portion 10 allows to guide away the fiber avoiding the crossover with the optical fibers 20 coming from the opposite opening 6a, 6b.

According to the present invention, each first guiding portion 9 has a first guiding wall 9a defining partially the first routing path 7 and each second guiding portion 10 has a second guiding wall 10a defining partially the second routing path 8. The first guiding walls 9a and second guiding walls 10a extend from the openings 6a, 6b mutually moving apart along the along the respective paths 7, 8. Each first guiding wall 9a and each second guiding wall 10a define the initial part of the respective routing path 7, 8 adjacent to the openings 6. Each first guiding wall 9a extends parallel to the rotation axis X-X defining the initial part of the first routing path 7 along a direction parallel to the rotation axis X-X. Instead each second guiding wall 10a extends along a direction transversal to the rotation axis X-X defining the initial part of the second routing path 8 along the direction transversal to the rotation axis X-X.

The first routing path 7 and the second routing path 8 are partially defined by the external wall 3 and dividing wall 11.

The external wall 3 has a first wall portion 3a, a second wall portion 3b and a third wall portion 3c. The first wall portion 3a is proximal to the rotation axis X-X and connects the first guiding portions 9, thereby defining partially the first routing paths 7so that the first routing path 7 is substantially parallel to the rotation axis X-X. The second wall portions 3b extend from the second guiding portions 8 along a respective path direction Z-Z transversal to the rotation axis X-X, thereby defining partially the second routing paths 8. The second guiding portions 10 link up the openings 6 with the respective second wall portion 3b, and the first guiding portion 9 link up the openings 6 with the first wall portion 3a. The third wall portion 3c is distal from the rotation axis X-X and connects the second wall portions 3b.

In detail, the first routing paths 7 are configured to route the optical fibers from one opening 6a, 6b toward the other one 6a, 6b along the first wall portion 3a, while the second routing paths 7 are configured to route the optical fibers away from the rotation axis X-X and/or the first wall portion 3a. More in detail, the first routing paths 7 by means of the first wall portion 3a and the first guiding walls 9a are configured to route the optical fiber from one opening 6a, 6b toward the other one 6a, 6b along a direction parallel to the rotation axis X-X. The second routing paths 8 are configured to route the optical fibers along a direction transversal to the rotation axis X-X by means of the second guiding portion 10a and the second wall portions 3b.

According to one embodiment, the first area 4a has a first meeting area 16 wherein the first paths 7 mutually meet. Preferably, the first meeting area 16 is arranged between the dividing wall 11 and the first wall portion 3a. On the other hand, the second area 4b has at least a second meeting area 17 wherein the second paths 8 mutually meet. Preferably, the second meeting area 17 is arranged adjacent to the third wall portion 3c.

In detail, the first area 4a, wherewithin the first paths 7 extend, is defined between the first side 11a of the dividing wall 11 and the first wall portion 3a while the second area 4b is arranged between the second side 11b of the dividing wall 11 and the third wall portion 3c.

Therefore, the first routing paths 7 partially extend between the first wall portion 3a and the dividing wall 11 and the second routing paths 8 partially extend between the respective second wall portion 3b and the dividing wall 11. In detail, the dividing wall 11 has a first portion 12 defining partially the first routing paths 7 and second portions 13 facing the second wall portions 3b of the external wall 3 and defining partially the second routing paths 8. Preferably, the second portions 13 are connected by the first portion 12 of the dividing wall 11.

According to one embodiment, each second wall portion 3b of the external wall 3 and a respective second portion 13 of the dividing wall 11 define a channel 18. Specifically, the channels 18 define partially the second routing paths 8 and are configured to guide the optical fibers 20 from the openings 6a, 6b to the second area 4b towards the second meeting area 17. In detail, the channels 18 are arranged between the second area 4b of the management area 4 and the external wall 3.

According to one embodiment, the fiber routing paths 7 is defined by the combination of the first guiding walls 9a, the first wall portion 3a of the external wall 3 and the first portion 12 of the dividing wall 11. In this way, the fiber routing path 7 is substantially parallel to the rotation axis X-X. The second routing paths 8 are defined by the combination of the second guiding walls 10a, the second wall portions 3b of the external wall 3 and the second portions 13 of the dividing wall 11.

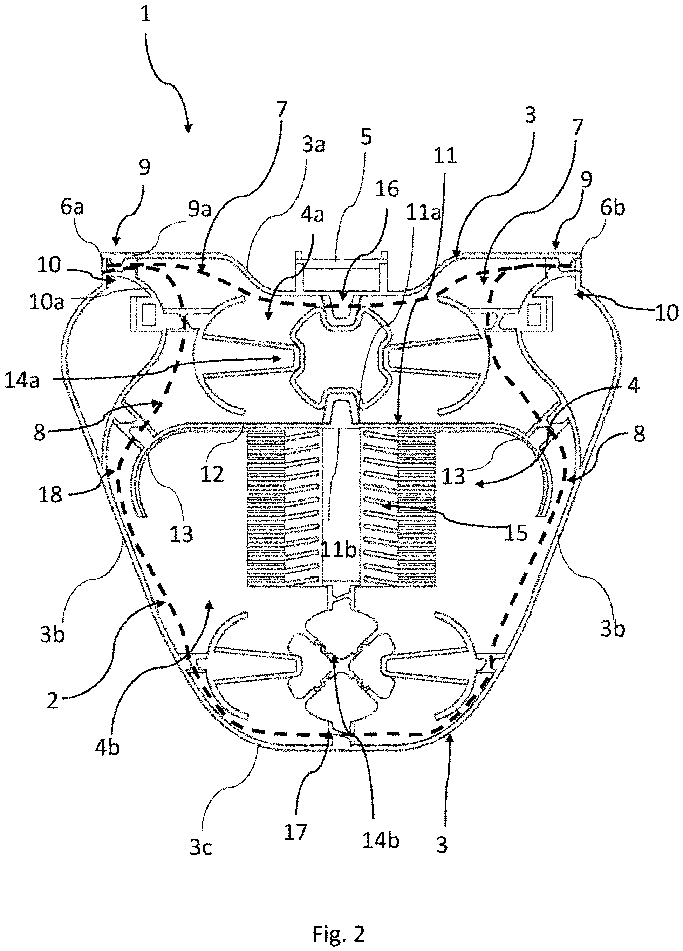

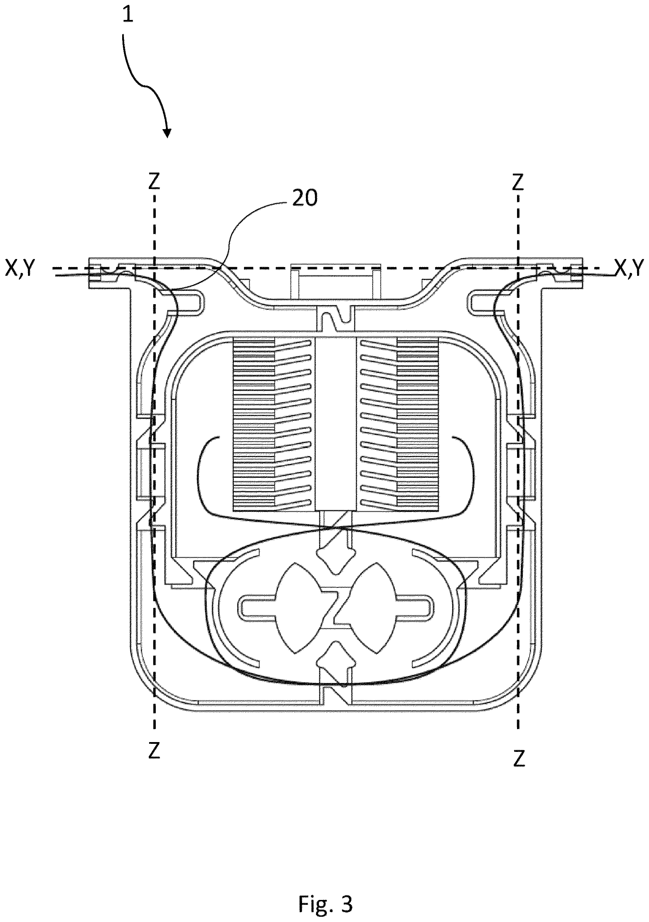

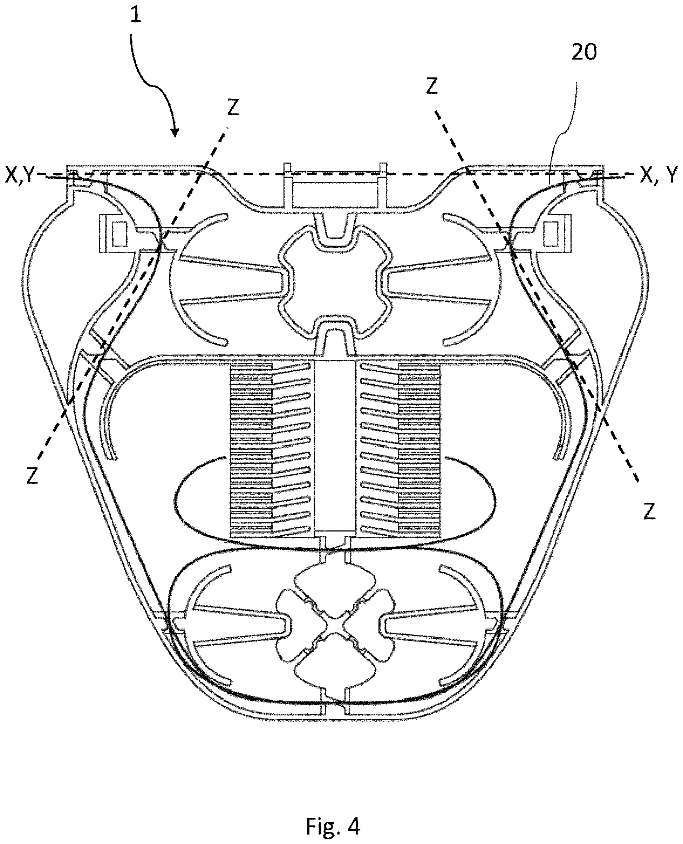

The first guiding wall 9a and second guiding wall 10 are part of the external wall 3 according to the embodiment shown in figures 1 and 3. Alternatively, the first guiding wall 9a is part of the external wall 3 and the second guiding wall 10 connect the openings 6a, 6b to the external wall 3 according to the embodiment shown in figures 2 and 4.

In summary, an optical fiber entering from one opening 6a, 6b may be guided along the first path 7. In this case, the optical fiber is guided by the first guiding portion 9 at the relative first guiding wall 9a which is part of the external wall 3. After the first guiding wall 9a, the optical fiber is guided by the first wall portion 3a, and optionally the optical fiber is coiled around to the routing coil 14a in the first area 4a. The optical fiber then meets an optical fiber coming from the opposite opening 6a, 6b at the first meeting area 16 or goes on the other first path 7 to the opposite opening 6a, 6b or is guided to the second path 8 extending from the opposite opening 6a, 6b.

Specifically, according to one embodiment, the routing coil 14a of the first area 4a is configured to guide the optical fiber 20 along the first routing path 7 adjacently to the dividing wall 11.

Moreover, an optical fiber 20 entering from one opening 6a, 6b may be guided along the second path 7. In this case, the optical fiber is guided by the second guiding portion 10 at the relative second guiding wall 10a which connects the opening 6a, 6b to the external wall 3 or is part of the external wall 3. After the second guiding wall 10a, the optical fiber is guided by the second wall portion 2b entering in the channel 18. By passing the channel 18, the optical fiber 20 enters in the second area 4b toward the second meeting point 17. Then the optical fiber 20 meets the optical fiber coming from the opposite opening 6a, 6b or coils around the routing coils 14b of the second area 4b toward the splicing support area 15 or towards the other channel 18.

## Claims

1. An optical fiber splice tray (1) for an optical termination box comprising:
- a base (2);
- an external wall (3) projecting from the base (2) and surrounding a fiber management area (4) formed on the base (2);
- a connecting member (5) associated to the base (2) and defining a rotation axis (X-X) to pivotally connect the base (2) to the optical termination box;
- two openings (6a, 6b) formed on the external wall (3), each opening (6) having an axis (Y-Y) aligned with the rotation axis (X-X);
- a first routing path (7) and a second routing path (8) extending from each opening (6a, 6b), each first routing path (7) and each second routing path (8) being configured to route away from the openings (6a, 6b) one or more optical fibers entering the fiber management area (4) through the openings (6a, 6b),
- a first guiding portion (9) and a second guiding portion (10) formed adjacent to each opening (6a, 6b),
- each first guiding portion (9) being configured to guide the optical fibers entering from the adjacent opening (6a, 6b) along the first routing path (7) and having a first guiding wall (9a) extending parallel to the rotation axis (X-X) from the relative opening (6a, 6b) and defining the initial part of the first routing path (7) adjacent to the relative opening (6a, 6b) along a direction parallel to the rotation axis (X-X);
- each second guiding portion (10) extending away from the first guiding portion (9) and away from the first routing path (7) and being configured to guide the optical fibers from the adjacent opening (6a, 6b) along the second routing path (8), each second guiding portion (10) having a second guiding wall (10a) extending along a direction (Z-Z) transversal to the rotation axis (X-X) from the relative opening (6a, 6b) and defining the initial part of the second routing path (8) along the direction (Z-Z) transversal to the rotation axis (X-X);
- each first guiding wall (9a) being part of the external wall (3) and each second guiding wall (10a) being part of the external wall (3) or connecting the openings (6a, 6b) to the external wall (3);
wherein the external wall (3) has:
- a first wall portion (3a) proximal to the rotation axis (X-X), the first guiding portions (9) linking up the openings (6) with the first wall portion (3a), the first wall portion (3a) connecting the first guiding portions (9) and defining partially the first routing paths (7) along a direction parallel to the rotation axis (X-X),
- second wall portions (3b) extending from the second guiding portions (10) along the direction (Z-Z) transversal to the rotation axis (X-X), each second guiding portion (10) linking up the respective opening (6) with the respective second wall portion (3b), the second wall portions (3b) defining partially the second routing paths (8), the second routing paths (8) being configured to route the optical fibers along the direction (Z-Z) transversal to the rotation axis (X-X) by means of the second guiding portion (10) and the second wall portion (3b) from the relative openings (6a, 6b),
- a third wall portion (3c) distal from the rotation axis (X-X) and connecting the second wall portions (3b).

2. The optical fiber splice tray (1) according to claim 1 wherein:
- each second guiding portion (10) has a curved shape with a radius of curvature equal or greater than a minimum bend radius of the optical fibers.

3. The optical fiber splice tray (1) according to claim 2 wherein:
- the radius of curvature ranges between 7.5 mm to 30 mm.

4. The optical fiber splice tray (1) according to anyone of claims 1-3, wherein the fiber management area (4) comprises:
- a dividing wall (11) having a first side (11a) and an opposite second side (11b),
- a first area (4a) arranged between the first side (11a) of the dividing wall (11) and the first wall portion (3a);
- a second area (4b) arranged between the second side (11b) of the dividing wall (11) and the third wall portion (3c).

5. The optical fiber splice tray (1) according to claim 4 wherein:
- the first routing paths (7) extend within the first area (4a);
- the second routing paths (8) join the first area and the second area (4b).

6. The optical fiber splice tray (1) according to claim 4 or 5, wherein the dividing wall (11) has:
- a first portion (12) defining partially the first routing paths (7),
- second portions (13) facing the second wall portions (3b) of the external wall (3), the second portions (13) defining partially the second routing paths (8).

7. The optical fiber splice tray (1) according to claim 6 wherein:
- the first guiding walls (9a), the first wall portion (3a) of the external wall (3) and the first portion (12) of the dividing wall (11) define the first routing paths (7);
- the second guiding walls (10a), the second wall portions (3b) of the external wall (3) and the second portions (13) of the dividing wall (11) define the second routing paths (8).

8. The optical fiber splice tray (1) according to anyone of claims 4 to 7, wherein the fiber management area (4) comprises within the second area (4b):
- one or more routing coils (14b) configured to receive the one or more optical fibers;
- a splicing support area (15) for retaining one or more splices.

9. The optical fiber splice tray (1) according to anyone of claims 4 to 8, wherein the fiber management area (4) comprise within the first area (4a):
- one or more routing coils (14a) for the one or more optical fibers.

10. The optical fiber splice tray (1) according to anyone of claims 1 to 9, wherein:
- the connecting member (5) is connected to the first wall portion (3a) between the two openings (6a, 6b).

## Patentansprüche

1. Spleißablage für optische Fasern (1) für eine optische Anschlussdose, das Folgendes umfasst:
- eine Basis (2);
- eine Außenwand (3), die von der Basis (2) vorsteht und einen auf der Basis (2) ausgebildeten Faserverwaltungsbereich (4) umgibt;
- ein Verbindungselement (5), das mit der Basis (2) verbunden ist und eine Drehachse (X-X) definiert, um die Basis (2) schwenkbar mit der optischen Anschlussdose zu verbinden;
- zwei Öffnungen (6a, 6b), die an der Außenwand (3) ausgebildet sind, wobei jede Öffnung (6) eine Achse (Y-Y) aufweist, die mit der Drehachse (X-X) ausgerichtet ist;
- einen ersten Leitpfad (7) und einen zweiten Leitpfad (8), die sich von jeder Öffnung (6a, 6b) erstrecken, wobei jeder erste Leitpfad (7) und jeder zweite Leitpfad (8) so konfiguriert sind, dass sie eine oder mehrere optische Fasern, die durch die Öffnungen (6a, 6b) in den Faserverwaltungsbereich (4) eintreten, von den Öffnungen (6a, 6b) wegleiten;
- einen ersten Führungsabschnitt (9) und einen zweiten Führungsabschnitt (10), die benachbart zu jeder Öffnung (6a, 6b) ausgebildet sind, wobei jeder erste Führungsabschnitt (9) konfiguriert ist, um die optischen Fasern, die von der benachbarten Öffnung (6a, 6b) eintreten, entlang des ersten Leitpfad (7) zu führen, und eine erste Führungswand (9a) aufweist, die sich parallel zu der Rotationsachse (X-X) von der relativen Öffnung (6a, 6b) erstreckt und den Anfangsteil des ersten Leitpfades (7) benachbart zu der relativen Öffnung (6a, 6b) entlang einer Richtung parallel zu der Rotationsachse (X-X) definiert;
- jeder zweite Führungsabschnitt (10) sich von dem ersten Führungsabschnitt (9) und von dem ersten Leitpfad (7) weg erstreckt und so konfiguriert ist, dass er die optischen Fasern von der benachbarten Öffnung (6a, 6b) entlang des zweiten Leitweges (8) führt, jeder zweite Führungsabschnitt (10) eine zweite Führungswand (10a) aufweist, die sich entlang einer Richtung (Z-Z) quer zur Rotationsachse (X-X) von der entsprechenden Öffnung (6a, 6b) aus erstreckt und den Anfangsteil des zweiten Führungspfades (8) entlang der Richtung (Z-Z) quer zur Rotationsachse (X-X) definiert;
- wobei jede erste Führungswand (9a) Teil der Außenwand (3) ist und jede zweite Führungswand (10a) Teil der Außenwand (3) ist oder die Öffnungen (6a, 6b) mit der Außenwand (3) verbindet;
wobei die Außenwand (3) Folgendes aufweist:
- einen ersten Wandabschnitt (3a) in der Nähe der Drehachse (X-X), wobei die ersten Führungsabschnitte (9) die Öffnungen (6) mit dem ersten Wandabschnitt (3a) verbinden, wobei der erste Wandabschnitt (3a) die ersten Führungsabschnitte (9) verbindet und teilweise die ersten Leitpfade (7) entlang einer Richtung parallel zur Drehachse (X-X) definiert,
- zweite Wandabschnitte (3b), die sich von den zweiten Führungsabschnitten (10) entlang der Richtung (Z-Z) quer zur Drehachse (X-X) erstrecken, wobei jeder zweite Führungsabschnitt (10) die jeweilige Öffnung (6) mit dem jeweiligen zweiten Wandabschnitt (3b) verbindet, die zweiten Wandabschnitte (3b) teilweise die zweiten Leitwege (8) definieren, wobei die zweiten Leitwege (8) so konfiguriert sind, dass sie die optischen Fasern entlang der Richtung (Z-Z) quer zur Drehachse (X-X) mittels des zweiten Führungsabschnitts (10) und des zweiten Wandabschnitts (3b) von den jeweiligen Öffnungen (6a, 6b) leiten,
- einen dritten Wandabschnitt (3c), der von der Drehachse (X-X) entfernt ist und die zweiten Wandabschnitte (3b) verbindet.

2. Spleißablage für optische Fasern (1) nach Anspruch 1, wobei:
- jeder zweite Führungsabschnitt (10) eine gekrümmte Form mit einem Krümmungsradius aufweist, der gleich oder größer ist als ein minimaler Biegeradius der optischen Fasern.

3. Spleißablage für optische Fasern (1) nach Anspruch 2, wobei:
- der Krümmungsradius zwischen 7,5 mm und 30 mm liegt.

4. Spleißablage für optische Fasern (1) nach einem der Ansprüche 1 bis 3, wobei der Faserverwaltungsbereich (4) Folgendes umfasst:
- eine Trennwand (11) mit einer ersten Seite (11a) und einer gegenüberliegenden zweiten Seite (11b),
- einen ersten Bereich (4a), der zwischen der ersten Seite (11a) der Trennwand (11) und dem ersten Wandabschnitt (3a) angeordnet ist;
- einen zweiten Bereich (4b), der zwischen der zweiten Seite (11b) der Trennwand (11) und dem dritten Wandabschnitt (3c) angeordnet ist.

5. Spleißablage für optische Fasern (1) nach Anspruch 4, wobei:
- die ersten Leitpfade (7) innerhalb des ersten Bereichs (4a) verlaufen;
- die zweiten Leitpfade (8) den ersten Bereich und den zweiten Bereich (4b) verbinden.

6. Spleißablage für optische Fasern (1) nach Anspruch 4 oder 5, wobei die Trennwand (11) Folgendes aufweist:
- einen ersten Abschnitt (12), der teilweise die ersten Leitpfade (7) begrenzt;
- zweite Abschnitte (13), die den zweiten Wandabschnitten (3b) der Außenwand (3) zugewandt sind, wobei die zweiten Abschnitte (13) teilweise die zweiten Leitpfade (8) definieren.

7. Spleißablage für optische Fasern für optische Fasern (1) nach Anspruch 6, wobei:
- die ersten Führungswände (9a), der erste Wandabschnitt (3a) der Außenwand (3) und der erste Abschnitt (12) der Trennwand (11) die ersten Leitpfade (7) definieren;
- die zweiten Führungswände (10a), die zweiten Wandabschnitte (3b) der Außenwand (3) und die zweiten Abschnitte (13) der Trennwand (11) definieren die zweiten Leitpfade (8).

8. Spleißablage für optische Fasern (1) für optische Fasern nach einem der Ansprüche 4 bis 7, wobei der Faserverwaltungsbereich (4) innerhalb des zweiten Bereichs (4b) Folgendes umfasst:
- eine oder mehrere Routingspulen (14b), die so konfiguriert sind, dass sie die eine oder mehreren optischen Fasern aufnehmen;
- einen Spleißstützbereich (15) zum Halten eines oder mehrerer Spleiße.

9. Spleißablage für optische Fasern (1) nach einem der Ansprüche 4 bis 8, wobei der Faserverwaltungsbereich (4) innerhalb des ersten Bereichs (4a) Folgendes umfasst:
- eine oder mehrere Routingspulen (14a) für eine oder mehrere optische Fasern.

10. Spleißablage für optische Fasern (1) nach einem der Ansprüche 1 bis 9, wobei:
- das Verbindungselement (5) mit dem ersten Wandabschnitt (3a) zwischen den beiden Öffnungen (6a, 6b) verbunden ist.

## Revendications

1. Plateau d'épissure de fibre optique (1) pour un boîtier de terminaison optique comprenant :
- une base (2) ;
- une paroi externe (3) faisant saillie depuis la base (2) et entourant une zone de gestion de fibre (4) formée sur la base (2) ;
- un élément de raccordement (5) associé à la base (2) et définissant un axe de rotation (X-X) pour raccorder de manière pivotante la base (2) au boîtier de terminaison optique ;
- deux ouvertures (6a, 6b) formées sur la paroi externe (3), chaque ouverture (6) présentant un axe (Y-Y) aligné sur l'axe de rotation (X-X) ;
- un premier chemin d'acheminement (7) et un deuxième chemin d'acheminement (8) s'étendant depuis chaque ouverture (6a, 6b), chaque premier chemin d'acheminement (7) et chaque deuxième chemin d'acheminement (8) étant configurés pour acheminer, à l'écart des ouvertures (6a, 6b), une ou plusieurs fibres optiques entrant dans la zone de gestion de fibre (4) à travers les ouvertures (6a, 6b),
- une première partie de guidage (9) et une deuxième partie de guidage (10) formées adjacentes à chaque ouverture (6a, 6b),
- chaque première partie de guidage (9) étant configurée pour guider les fibres optiques entrant depuis l'ouverture (6a, 6b) adjacente le long du premier chemin d'acheminement (7) et présentant une première paroi de guidage (9a) s'étendant parallèlement à l'axe de rotation (X-X) à partir de l'ouverture (6a, 6b) relative et définissant la partie initiale du premier chemin d'acheminement (7) adjacente à l'ouverture (6a, 6b) relative le long d'une direction parallèle à l'axe de rotation (X-X) ;
- chaque deuxième partie de guidage (10) s'étendant à l'écart de la première partie de guidage (9) et à l'écart du premier chemin d'acheminement (7) et étant configurée pour guider les fibres optiques depuis l'ouverture (6a, 6b) adjacente le long du deuxième chemin d'acheminement (8), chaque deuxième partie de guidage (10) présentant une deuxième paroi de guidage (10a) s'étendant le long d'une direction (Z-Z) transversale à l'axe de rotation (X-X) depuis l'ouverture (6a, 6b) relative et définissant la partie initiale du deuxième chemin d'acheminement (8) le long de la direction (Z-Z) transversale à l'axe de rotation (X-X) ;
- chaque première paroi de guidage (9a) faisant partie de la paroi externe (3) et chaque deuxième paroi de guidage (10a) faisant partie de la paroi externe (3) ou raccordant les ouvertures (6a, 6b) à la paroi externe (3) ;
dans lequel la paroi externe (3) présente :
- une première partie de paroi (3a) proximale de l'axe de rotation (X-X), les premières parties de guidage (9) reliant les ouvertures (6) à la première partie de paroi (3a), la première partie de paroi (3a) raccordant les premières parties de guidage (9) et définissant partiellement les premiers chemins d'acheminement (7) le long d'une direction parallèle à l'axe de rotation (X-X),
- des deuxièmes parties de paroi (3b) s'étendant depuis les deuxièmes parties de guidage (10) le long de la direction (Z-Z) transversale à l'axe de rotation (X-X), chaque deuxième partie de guidage (10) reliant l'ouverture (6) respective à la deuxième partie de paroi (3b) respective, les deuxièmes parties de paroi (3b) définissant partiellement les deuxièmes chemins d'acheminement (8), les deuxièmes chemins d'acheminement (8) étant configurés pour acheminer les fibres optiques le long de la direction (Z-Z) transversale à l'axe de rotation (X-X) au moyen de la deuxième partie de guidage (10) et de la deuxième partie de paroi (3b) à partir des ouvertures (6a, 6b) relatives,
- une troisième partie de paroi (3c) distale de l'axe de rotation (X-X) et raccordant les deuxièmes parties de paroi (3b).

2. Plateau d'épissure de fibre optique (1) selon la revendication 1 dans lequel :
- chaque deuxième partie de guidage (10) présente une forme incurvée avec un rayon de courbure supérieur ou égal à un rayon de courbure minimal des fibres optiques.

3. Plateau d'épissure de fibre optique (1) selon la revendication 2 dans lequel :
- le rayon de courbure est compris entre 7,5 mm et 30 mm.

4. Plateau d'épissure de fibre optique (1) selon l'une quelconque des revendications 1 à 3, dans lequel la zone de gestion de fibre (4) comprend :
- une paroi de division (11) présentant un premier côté (11a) et un deuxième côté opposé (11b),
- une première zone (4a) agencée entre le premier côté (11a) de la paroi de division (11) et la première partie de paroi (3a) ;
- une deuxième zone (4b) agencée entre le deuxième côté (11b) de la paroi de division (11) et la troisième partie de paroi (3c).

5. Plateau d'épissure de fibre optique (1) selon la revendication 4 dans lequel :
- les premiers chemins d'acheminement (7) s'étendent à l'intérieur de la première zone (4a) ;
- les deuxièmes chemins d'acheminement (8) joignent la première zone et la deuxième zone (4b).

6. Plateau d'épissure de fibre optique (1) selon la revendication 4 ou 5, dans lequel la paroi de division (11) présente :
- une première partie (12) définissant partiellement les premiers chemins d'acheminement (7),
- des deuxièmes parties (13) faisant face aux deuxièmes parties de paroi (3b) de la paroi externe (3), les deuxièmes parties (13) définissant partiellement les deuxièmes trajets d'acheminement (8).

7. Plateau d'épissure de fibre optique (1) selon la revendication 6 dans lequel :
- les premières parois de guidage (9a), la première partie de paroi (3a) de la paroi externe (3) et la première partie (12) de la paroi de division (11) définissent les premiers chemins d'acheminement (7) ;
- les deuxièmes parois de guidage (10a), les deuxièmes parties de paroi (3b) de la paroi externe (3) et les deuxièmes parties (13) de la paroi de division (11) définissent les deuxièmes chemins d'acheminement (8).

8. Plateau d'épissure de fibre optique (1) selon l'une quelconque des revendications 4 à 7, dans lequel la zone de gestion de fibre (4) comprend à l'intérieur de la deuxième zone (4b) :
- une ou plusieurs bobines d'acheminement (14b) configurées pour recevoir les une ou plusieurs fibres optiques ;
- une zone de support d'épissure (15) pour retenir une ou plusieurs épissures.

9. Plateau d'épissure de fibre optique (1) selon l'une quelconque des revendications 4 à 8, dans lequel la zone de gestion de fibre (4) comprend à l'intérieur de la première zone (4a) :
- une ou plusieurs bobines d'acheminement (14a) pour les une ou plusieurs fibres optiques.

10. Plateau d'épissure de fibre optique (1) selon l'une quelconque des revendications 1 à 9, dans lequel :
- l'élément de raccordement (5) est raccordé à la première partie de paroi (3a) entre les deux ouvertures (6a, 6b).
